# EUROPEAN PATENT APPLICATION

(11) **EP 4 832 402 A1**
(43) Date of publication of application: **28.10.2026**
(21) Application number: 25171805.2
(22) Date of filing: 22.04.2025
(51) Int. Cl.: H04L 5/00, H04W 72/541, G01S 7/00, G01S 7/02

(54) **A METHOD OF ALLOCATING RADIO RESOURCE BLOCKS IN AN ISAC SYSTEM**

(71) Applicant: Vodafone Group Services Limited, Newbury RG14 2FN (GB)
(72) Inventor: BOUKLEY HASAN, Wael, London, W2 6BY (GB); KULAKOV, Alexey, London, W2 6BY (GB)
(74) Representative: Boult Wade Tennant LLP

(57) **Abstract**

A method of allocating radio resource blocks in an Integrated Sensing and Communication, ISAC, system, is provided. The ISAC system is configured to communicate sensing signals and data signals during a plurality of radio resource blocks. Each radio resource block has a corresponding frequency. The method comprises determining that signals communicated by the ISAC system during one or more radio resource blocks within an available frequency band cause interference with and/or experience interference from signals communicated by a neighbouring base station. The method further comprises allocating one or more radio resource blocks within the first frequency band for communicating sensing signals.

## Description

### Field of the invention

The present invention relates to methods of communicating sensing and data signals in an Integrated Sensing and Communication (ISAC) system. In some specific examples, the invention relates to techniques for mitigating interference caused by the ISAC system or experienced by the ISAC system by allocating sensing signals to radio resource blocks subject to interference.

### Glossary

ISAC - Integrated Sensing and Communication
MIMO - Multiple-Input Multiple-Output
Al - Artificial Intelligence
SBFD - Sub-Band Full-Duplex
RAN - Radio Access Network
CLI - Cross-Link Interference
BPSK - Binary Phase-Shift Keying
BWP - Bandwidth Part
CC - Component Carrier
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Advanced telecommunications networks may integrate both sensing and communications technologies. Such networks may transmit and receive both signals for sensing and signals for data communication from the same base station. For sensing, the network may utilise radar-like signals for the purpose of detecting and tracking nearby objects, for example. For data communications, the network may utilise a known communications system, such as a cellular communications system.

Transmission and receipt of signals in networks is typically multiplexed. For example, there may be a series of timeslots available for communication of signals. Each timeslot may then be used to communicate a different signal. For example, a first timeslot may be used to communicate a sensing signal. A second timeslot may be used to transmit a data signal (also referred to as a "communications signal"). A third timeslot may be used to transmit a different data signal. A fourth timeslot may be used to receive a data signal, and so on. Additionally or alternatively, multiplexing may be performed in the frequency domain. A general time and/or frequency slot may be referred to as a radio resource allocation.

ISAC technology may simultaneously serve traditional wireless data communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; Al model creation and training; and modulation scheme adaptation. ISAC technology may enable the network to react quickly to the changing needs of its subscribers. The sensing and data communication aspects of ISAC technology may each comprise common elements, such as beamforming and phased antenna arrays. ISAC technology may further comprise channel estimation, symbol detection and object detection functionality, wherein these functions are provided by common hardware.

To improve flexibility and radio resource usage efficiency, frequency bands may be further divided into sub-bands (component carriers).

In a conventional TDD scheme, time frames are designated as uplink or downlink time frames. To reduce latency, a radio resource block in a downlink time frame may be used for uplink. As a result, time-critical uplink communications may be communicated more promptly, rather than being delayed until the next available uplink time frame. To standardise this behaviour, sub-band full-duplex (SBFD) was introduced to 3GPP RAN in release 18 as a study item and a working item in release 19. SBFD enables the base station to perform transmit and receive operations in the same time frame, using non-overlapping frequency resources (sub-bands).

It is envisaged that ISAC and SBFD may be integrated at the same base station (for example, in 6G 3GPP Releases).

Signals communicated between a base station and UE may experience interference from signals communicated by a neighbouring base station. These interfering signals may be on the same frequency sub-band or an adjacent frequency sub-band. This may be referred to as "cross-link interference" (CLI).

A common source of cross link interference is downlink signals interfering with uplink signals of a neighbouring base station. One reason for this is that downlink signals have a relatively high transmit power compared to uplink signals.

One conventional CLI mitigation method involves uniform power reduction of downlink signals, which improves UL but reduces DL throughput. Another approach involves adding guard bands, which reduce interference but waste spectrum. A further approach involves coordinated scheduling, which requires complex network management.

### Summary

Against this background, there is a need to address the issue of CLI between an ISAC system and neighbour cells. Accordingly, a method of allocating radio resource blocks in an ISAC system, is provided. The proposed methods identify radio resource blocks that are subject to interference with neighbouring base stations and allocate these radio resource blocks for communicating sensing signals, instead of data signals. Sensing signals generally create less interference for neighbouring base stations because they are transmitted at a lower power and have a higher antenna tilt. By allocating these radio resource blocks for communicating sensing signals the proposed methods may reduce interference experienced by the neighbouring base station, while maintaining communication capabilities of both base stations. Moreover, since reflected sensing signals received at the ISAC base station may be analysed using correlation techniques, these signals may be effective even when the SNR is not high and so are less susceptible to interference. These signals are therefore suitable for use in radio resource block that are identified as having interference with neighbouring base stations.

Accordingly, a method of allocating radio resource blocks in an Integrated Sensing and Communication, ISAC, system is provided. The ISAC system is configured to communicate sensing signals and data signals during a plurality of radio resource blocks. Each radio resource block has a corresponding frequency. The method comprises determining that signals communicated by the ISAC system during one or more radio resource blocks within an available frequency band cause interference with and/or experience interference from signals communicated by a neighbouring base station. The method further comprises allocating one or more radio resource blocks within the available frequency band for communicating sensing signals.

The ISAC system may comprise an ISAC base station. The method may be performed by the ISAC base station.

The neighbouring base station may be an ISAC base station.

The signals communicated by the ISAC system may have a center frequency (carrier frequency) that is the same as a center frequency of the signals communicated by the neighbouring base station. In other words, the interference may occur within a frequency channel.

Alternatively, the signals communicated by the ISAC system may have a center frequency (carrier frequency) that is different to a center frequency of the signals communicated by the neighbouring base station. In other words, the interference may occur between different (usually adjacent) frequency channels.

The one or more radio resource blocks that cause and/or experience interference may each have a center frequency and the one or more radio resource blocks allocated for communicating sensing signals may each have the same center frequency. Similarly, the one or more radio resource blocks that cause and/or experience interference may each have a frequency bandwidth and the one or more radio resource blocks allocated for communicating sensing signals may each have the same frequency bandwidth. In other words, the interference may be identified on a particular center frequency and bandwidth and addressed by allocating radio resource blocks having that same center frequency and bandwidth for communicating sensing signals.

Determining that the signals communicated by the ISAC system cause interference with and/or experience interference from the signals communicated by the neighbouring base station may comprise determining that a level of interference (a measure of interference) between the signals communicated by the ISAC system and the signals communicated by the neighbouring base station exceeds a threshold.

Where signals communicated by a first system are said to "cause interference with and/or experience interference from" other signals communicated by a second (neighbouring) system, this may mean that the first system and/or the second system is the victim and/or the aggressor of the interference. This may alternatively be written as the signals are "subject to" interference with each other. In other words, a communications channel associated with the radio resource blocks of the first system may be communicatively coupled with a communications channel associated with radio resource blocks of the second (neighbouring) system.

Where the neighbouring base station is the victim, the radio resource block of the ISAC system may cause significant interference for the neighbouring base station. For the interference to be "significant", the relevant radio resource block may be affected relatively more than other radio resource blocks.

Where the neighbouring base station is the aggressor, the radio resource block of the ISAC system may experience significant interference from signals communicated by the neighbouring base station. As above, for the interference to be "significant", the relevant radio resource block may be affected relatively more than other radio resource blocks.

The level of interference may comprise a level of interference caused by the signals communicated by the ISAC system affecting the signals communicated by the neighbouring base station.

In other words, the measurement of interference may relate to interference caused by the ISAC system and experienced by the neighbouring base station (i.e., the neighbouring base station is the victim and the ISAC system is the aggressor).

The level of interference may comprise a level of interference caused by the signals communicated by the neighbouring base station affecting the signals communicated by the ISAC system.

In other words, the measurement of interference may relate to interference caused by the neighbouring base station and experienced by the ISAC system (i.e., the ISAC system is the victim and the neighbouring base station is the aggressor).

The level of interference may comprise both the level of interference caused by the signals communicated by the ISAC system affecting the signals communicated by the neighbouring base station, and a level of interference caused by the signals communicated by the neighbouring base station affecting the signals communicated by the ISAC system.

In other words, the measurement of interference may relate to both interference caused by the ISAC system and experienced by the neighbouring base station and interference caused by the neighbouring base station and experienced by the ISAC system (i.e., the neighbouring base station is both the victim and the aggressor, and the ISAC system is both the victim and the aggressor).

The frequency band available to the ISAC system may be divided into a plurality of frequency sub-bands. Each radio resource block may have a corresponding frequency sub-band. The one or more radio resource blocks that cause and/or experience interference may have a first frequency sub-band. The one or more radio resource blocks allocated for communicating sensing signals may have the same first frequency sub-band.

A frequency band available to the neighbouring base station may be divided into a plurality of frequency sub-bands. The signals communicated by the neighbouring base station that cause interference with and/or experience interference from the signals communicated by the ISAC system may be communicated via a second frequency sub-band adjacent to the first frequency sub-band.

The radio resource block for the sensing signal in the adjacent frequency sub-band may be allocated in the same time frame and having a frequency sub-band that is directly above or directly below the interfering radio resource block of the neighbouring base station (e.g., the extended uplink radio resource block). In this way, the interference at the neighbouring base station may be reduced.

In a specific example, the cross-link interference may be reduced if both of the ISAC base station and the neighbouring base station are operating as SBFD. Nevertheless, the proposed methods may still be used to reduce interference where one or both of the ISAC base station and the neighbouring base station are not operating as SBFD.

Moreover, in a specific example, the proposed methods may be used to reduce interference caused between adjacent frequency channels at neighbouring base stations. Nevertheless, the proposed methods could also be used to reduce interference caused between signals broadcast by neighbouring base stations via the same frequency channel. In other words, the signals that are subject to interference could have the same center frequency and bandwidth or could have different center frequencies offset by the signal bandwidth.

If both the ISAC system and the neighbouring base station are operating as SBFD, interference may be caused between adjacent sub-bands of the ISAC system and the neighbouring base station. Generally, interference between adjacent frequency sub-bands is more likely to present an issue than interference within the same frequency sub-band. This is because measures already exist to reduce the impact of interference on the same frequency sub-band. For example, scheduling and frequency allocation between base stations. Nevertheless, where interference is experienced on the same sub band between neighbouring base stations, the proposed methods may be used to reduce the impact of the interference.

The sensing and data signals may be communicated during a plurality of time frames. The plurality of time frames and the plurality of frequency sub-bands may together provide the plurality of radio resource blocks, each radio resource block having a frequency sub-band and time frame.

The signals communicated by the neighbouring base station may be data signals communicated between the neighbouring base station and a UE served by the neighbouring base station.

Alternatively, the signals communicated by the neighbouring base station may be sensing signals (e.g., signals transmitted by the base station and/or reflections of the sensing signals from objects of interest).

In some alternative examples, the interfering signal in the neighbouring cell may be sensing signals transmitted by the UE served by the neighbouring base station. Generally, sensing signals are transmitted by the base station but it may be possible for the UE to transmit sensing signals in some cases.

The data signals communicated between the neighbouring base station and the UE served by the neighbouring base station may be uplink data signals sent from the UE to the neighbouring base station.

Interference uplink data signals sent from the UE to the neighbouring base station may be an important use case for the proposed methods. Uplink signals in the neighbouring cell received by the neighbouring base station may be more likely to be affected by the interference, due to the relatively lower power of these signals compared with downlink data signals.

In a scenario where downlink signals transmitted by the ISAC base station during the radio resource block cause significant interference at the neighbouring base station (e.g., to an extended uplink radio resource block in the neighbouring base station), the interference experienced by the neighbouring base station may be reduced by allocating the radio resource block as a sensing radio resource block, rather than a downlink radio resource block.

Downlink data signals are a common source of interference, due to their relatively high power compared to uplink data signals. Nevertheless, interference can also be caused by uplink data signals (e.g., if the interfering UE happens to be in close proximity). In one example, interference may be caused by uplink signals from a UE communicating with an adjacent base station, the radio resource block of the ISAC system experiencing the interference may not be useable for downlink in the ISAC system, because the interference is too high (or may be useable but error-prone). In some examples, these affected radio resource blocks may be allocated as sensing signals transmitted during the DL period, instead of downlink data signals. As a result, UEs served by the ISAC system are not receiving any downlink data signals from the ISAC system via the affected radio resource block. Therefore, the UE will not experience cross link interference from the neighbouring base station uplink signals (e.g., SBFD UE UL) during the radio resource block.

There may also be a scenario where uplink data signals are affected by uplink data signals from the neighbouring base station. In one example, the radio resource block of the ISAC system may not be useable for uplink due to uplink at the neighbouring base station (e.g., SBFD uplink). The ISAC system may therefore use this radio resource block for sensing instead. In another example, uplink data signals (e.g., extended uplink data signals in a SBFD system) received by the ISAC base station during the radio resource block may cause significant interference at the neighbouring base station. To reduce the impact, the ISAC system may allocate sensing signals on the affected radio resource block, so that the interference is reduced.

The data signals communicated between the neighbouring base station and the UE served by the neighbouring base station may be downlink data signals sent from the neighbouring base station to the UE.

In some examples, the interference may be caused by downlink data signals from the adjacent base station to a UE served by the adjacent base station. In this scenario, the affected radio resource block may not be useable for UL by the ISAC system, as the interference is too high (or it may be useable but error prone). Therefore, the affected radio resource block may be used for sensing instead. In this way, the affected resource block is not wasted so radio resources may be used more efficiently overall.

In some cases, the downlink interference from the neighbouring base station might be so severe that the radio resource block is unusable for downlink by the ISAC system. In this case, the ISAC system may allocate the radio resource block for sensing instead.

The determination that the one or more radio resource block cause interference with and/or experience interference from the neighbouring base station may be based on scheduling. In other words, the ISAC system may determine ahead of time that the neighbouring base station is using a radio resource block in a way that creates interference for the ISAC system or is susceptible to interference from the ISAC system. This determination may be based on scheduling information exchanged between the base stations. Alternatively, this determination may be based on historical interference experienced on radio resource blocks having the same frequency.

A likelihood of a radio resource block being subject to interference may be based on previous interference experienced by (or caused by) radio resource blocks having a same frequency as the one or more radio resource blocks.

The method may further comprise communicating sensing signals during the one or more allocated radio resource blocks.

Each radio resource block may have a corresponding beam direction. The one or more radio resource blocks that cause and/or experience interference may also each have a beam direction. The one or more radio resource blocks allocated for communicating sensing signals may also each have the same beam direction.

In other words, the channels may be directional and interference may be experienced between channels having a same beam direction.

The method may further comprise communicating, between the ISAC system and the neighbouring base station, an indication that the one or more radio resource blocks are allocated for communicating sensing signals.

The neighbouring base station may be configured to allocate one or more radio resource blocks as extended uplink radio resource blocks. The one or more radio resource blocks allocated as extended uplink radio resource blocks by the neighbouring base station may each have a second frequency sub-band adjacent to a frequency sub-band of the one or more radio resource blocks allocated for communicating sensing signals by the ISAC system.

The second frequency sub-band may be different to the first frequency sub-band.

The method may further comprise communicating, between the ISAC system and the neighbouring base station, a level of interference between the signals communicated by the ISAC system and the signals communicated by the neighbouring base station.

The level of interference may be determined by the ISAC system, the neighbouring base station, a UE served by the ISAC system and/or a UE served by the neighbouring base station.

Determining that the signals communicated by the ISAC system cause interference with signals communicated by a neighbouring base station may comprise receiving an indication form the neighbouring base station.

The method may further comprise reevaluating whether signals communicated by the ISAC system during one or more radio resource blocks within the available frequency band are subject to interference with the signals communicated by the neighbouring base station (i.e., cause interference with and/or experience interference from the signals communicated by the neighbouring base station).

If the signals communicated by the ISAC system during the one or more radio resource blocks within the available frequency band are no longer subject to interference with the signals communicated by the neighbouring base station (i.e., no longer cause interference with and/or experience interference from the signals communicated by the neighbouring base station), the method may further comprise allocating one or more radio resource blocks within the available frequency band (and optionally having the same center frequency and/or bandwidth) for communicating data signals.

If the signals communicated by the ISAC system during one or more radio resource blocks within the available frequency band are still subject to interference with the signals communicated by the neighbouring base station (e.g., the situation has not improved or has worsened), the method may further comprise reducing a transmission power of the sensing signals communicated by the ISAC system.

In other words, if interference is still an issue or worsens (which may be determined by observing that the UL SINR of the neighbouring base station degrades), the ISAC system may reduce a signal power of the sensing signals to further alleviate interference.

An Integrated Sensing and Communication, ISAC, base station configured to perform any of the methods described above is also provided.

A computer program comprising instructions that, when executed by a processor, cause the processor to perform the any of the methods described above is also provided.

The method may further comprise allocating, by the neighbouring base station, an extended uplink radio resource block in a first time frame and having a first frequency sub-band. The method may further comprise allocating, by the ISAC system, a sensing radio resource block in the first time frame and having a second frequency sub-band adjacent to the first frequency sub-band.

The extended uplink radio resource block may be allocated for receiving an uplink communications signal from a User Equipment, UE, served by the neighbouring base station. The sensing radio resource block may be allocated for communicating a sensing signal by the ISAC system.

Advantageously, by the ISAC system allocating a sensing signal in the block adjacent to the uplink signal of the neighbouring base station, the uplink signal received from the UE by the neighbouring base station may experience a lower level of interference from the ISAC system, compared to a scenario where the ISAC system allocates a downlink data signal.

Moreover, the uplink signal received from the UE by the neighbouring base station may be isolated by removing the interference caused by the sensing signal communicated by the ISAC system in the adjacent block. Removal of interference may be performed more effectively and efficiently where the interference signal from the ISAC base station in the adjacent block is a sensing signal (rather than a downlink data signal), because the sensing signal may be the same each time and may be known ahead of time.

The interference may be determined in a number of ways. In some examples, the interference may be measured in advance during a reserved (empty) resource block, with the sensing signal being communicated by the ISAC system in an adjacent block. Advantageously, the interference may be measured without complex calculation.

In other examples, the interference may be determined based on prior knowledge of the sensing signal (which is typically predetermined and only changes infrequently, if at all). Prior knowledge of the sensing signal may be used to determine the interference via a cross correlation of the received signal with the predefined sensing signal. This may require complex calculation, which may utilise processing and power resources. However, this may avoid the need for the above method, in which a reserved slot is allocated for determining interference. As a result, this method may use radio resources more efficiently.

In any case, the interference caused by the sensing signal communicated by the ISAC system in the adjacent block may be determined once and then this determined interference may be subtracted from each extended uplink radio resource block adjacent to the sensing signal. Advantageously, because the sensing signal does not change (or changes infrequently) the interference to be removed can be re-used and does not need to be re-determined each time. This method may therefore improve efficiency in terms of radio resource usage, computational resource usage and/or power usage.

The interference may be re-determined periodically, to correct for any drift in the interference over time (e.g., transmission changes due to changes in temperature). Moreover, the interference may be redetermined if the sensing signal changes.

In some examples, the proposed methods for interference reduction may allow for smaller guard frequency bands (or no guard frequency bands at all), as compared to prior art methods.

In some examples, the first time frame may be designated as a downlink time frame.

The frequency sub-bands may be contiguous.

Adjacent frequency sub-bands may be separated by a guard frequency band. By separating the frequency sub-bands with a guard frequency band, the amplitude of interference may be reduced.

A guard frequency band may be a reserved portion of the frequency spectrum between allocated frequency sub-bands, in which no signals are communicated.

The method may further comprise allocating, by the neighbouring base station, a reserved radio resource block in a second time frame. The method may further comprise transmitting by the ISAC system a predefined sensing signal during a radio resource block in the second time frame. The radio resource block of the sensing signal may have a sub-frequency band adjacent to a sub-frequency band of the reserved radio resource block. The method may further comprise receiving, by the neighbouring base station, a signal during the reserved radio resource block. The received signal may comprise a component caused by interference of the sensing signal. The method may further comprise measuring the component of the received signal caused by interference of the sensing signal.

The second time frame may be a preceding time frame earlier than the first time frame (temporally prior to the first time frame), so that the measured interference component is already available when removing the interference from the first radio resource block.

In other words, the method may comprise: in an earlier time frame, communicating a sensing signal by the ISAC system in a sub-frequency band adjacent to a reserved block of the neighbouring base station (a block that is not allocated for communicating sensing signals, transmitting DL data signals or receiving UL data signals); and measuring by the neighbouring base station (and/or a UE served by the neighbouring base station) the received interference during the reserved block caused by the sensing signal communicated by the ISAC system in the adjacent block.

Alternatively, the second time frame may be later than the first time frame (temporally subsequent to the first time frame). The received signal during the first time frame may be stored and the interference may be removed from the received signal after the received interference during the second time frame has been measured.

This may be useful, for example, if the data signal has already been received/scheduled at the time the neighbouring base station identifies that the channel condition has changed. The updated interference measurement may be obtained during a subsequent time frame, and the data signal may nevertheless be recovered.

Measuring the component of the received signal caused by interference of the sensing signal may comprise using prior knowledge of the predefined sensing signal transmitted by the ISAC base station to isolate the component of the received signal caused by interference of the sensing signal.

Alternatively, interference from other sources may be assumed to be zero and measuring the component of the received signal caused by interference of the sensing signal may comprise measuring the received signal.

There may be one frequency sub-band designated for use during extended UL transmission or a plurality of sub-bands.

The method may further comprise receiving, at the neighbouring base station, a data signal during the extended uplink radio resource block. The received data signal may comprise a first component received from a User Equipment, UE, served by the neighbouring base station and a second component caused by interference of the sensing signal communicated during the sensing radio resource block. The method may further comprise removing the second component from the received data signal by subtracting the interference measured during the reserved block.

In other words, the value of interference measured during the reserved block may be subtracted from the signal received from a UE during an extended UL block. This may be an efficient way to remove interference from the extended UL block.

The method may further comprise, during one or more subsequent time frames, allocating, at the neighbouring base station, an extended uplink radio resource block in the subsequent time frame, allocating, at the ISAC base station, a sensing radio resource block in the subsequent time frame in a sub-frequency band adjacent to a sub-frequency band of the extended uplink radio resource block, receiving, at the neighbouring base station, a data signal during the extended uplink radio resource block, and removing an interference component from the received data signal by subtracting the interference measured during the reserved block (as described above).

In other words, the value of interference measured once may be used for a plurality of subsequent extended uplink blocks.

The method may further comprise measuring the interference again and updating the value used to remove the interference from the received extended UL signal.

The interference may be measured periodically (e.g., every X frames) or whenever a condition is met (e.g., a measure of channel condition changes or an error is detected in the uplink signal, or the error rate exceeds a threshold).

In some examples, if a measure of channel condition indicates that the recovered signal will be corrupted to an extent that data transmission by BPSK is error prone or impossible, the neighbouring base station may measure the interference again.

This may be used to account for changes in channel conditions (e.g., due to changes in temperature).

A channel condition may be measured via one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

The system may be operating a sub-band non-overlapping Full Duplex, SBFD, scheme.

The SBFD scheme may be operated within a Time Division Duplex, TDD, carrier.

The first time frame (and the second time frame and each subsequent time frame) may be a downlink time frame of the TDD carrier.

The SBFD scheme may be operated within a single configured downlink, DL, and uplink, UL, bandwidth part, BWP, pair.

The DL and UL BWP pair may each have the same centre frequency.

### Brief description of the drawings

Fig. 1 shows an example telecommunications system.
Fig. 2 shows example radio resource allocation in TDD and SBFD operation.

### Detailed description

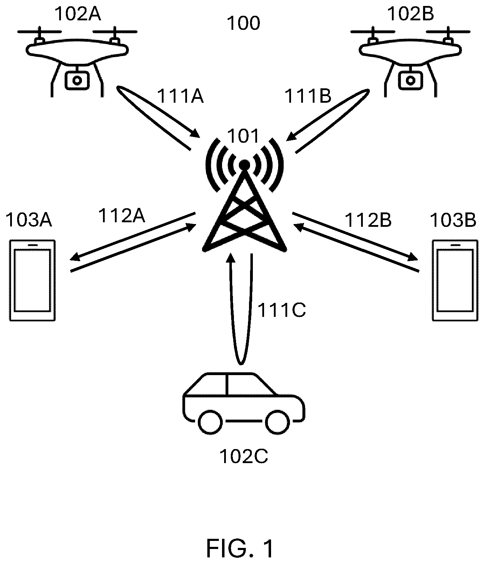

Fig. 1 shows an example telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and data signals communicated along such channels may be received by any of the targets. For example, sensing signals communicated along channels 111A, 111B, and 111C may be received by UEs 103A or 103B. As such, if a sensing signal is sent along a sensing channel simultaneously with a data signal along a communications channel, for example channel 112A, the receiving UE, for example UE 103A, may not be able to decode the data signal due to interference from the sensing signal.

Time-domain multiplexing and/or frequency-domain multiplexing may be employed. For example, time axis may be divided into a sequence of time slots and/or the frequency axis may be divided into a sequence of frequency slots.

A transmitter may communicate signals in different directions via beamforming. Each beam may carry a different signal so that each beam is a separate radio resource allocation. Therefore, in some examples, each unique combination of timeslot, frequency and beam constitutes a different radio resource allocation, where all techniques are used (frequency multiplexing, time domain multiplexing, and beamforming). In other examples, one or two of these techniques may be used.

As described above, SBFD enables simultaneous transmit and receive operations at the base station, using non-overlapping frequency resources ("sub-bands"). Use of SBFD extends the duration over which UL transmission can occur, in order to improve UL coverage/capacity and latency performance.

In some examples, radio resource blocks in downlink time frames are used for extended uplink. Since the transmit power of uplink signals is generally lower than for equivalent downlink signals, these radio resource blocks are more susceptible to interference. In particular, a significant source of interference for these radio resource blocks may originate from neighbouring base stations transmitting downlink signals on neighbouring frequency bands.

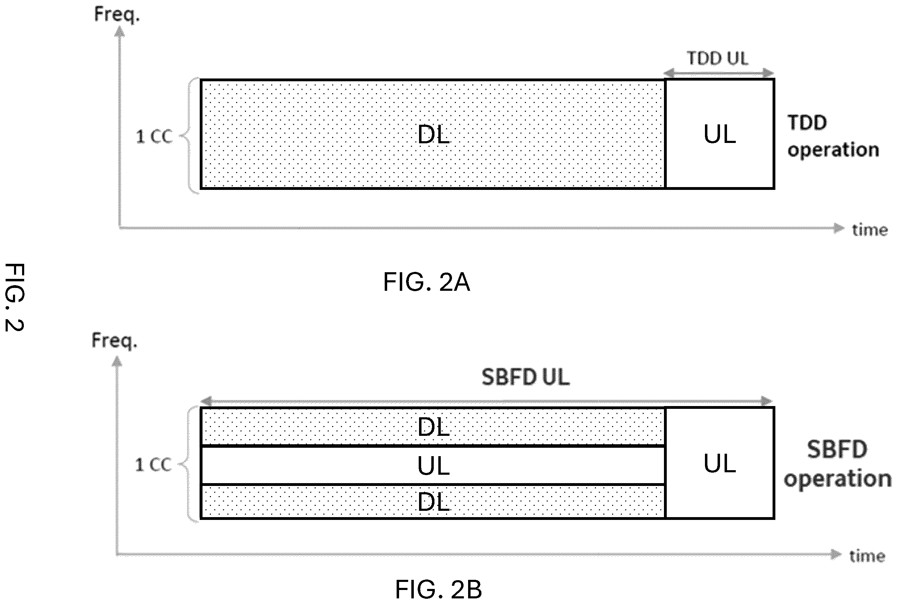

Fig. 2 illustrates how UL and DL radio resources are allocated in TDD time frames, compared to how radio resources may be allocated during SBFD operation. In Fig. 2A, standard TDD operation is illustrated, in which the radio resources are divided into DL and UL time frames. As can be seen in the SBFD operation of Fig. 2B, the DL time frame is divided into blocks by separating the frequency band (illustrated as 1 component carrier, CC) into sub-bands. One or more of the blocks may be allocated for UL, thus increasing the UL capacity.

A component carrier refers to an individual carrier frequency that can be combined with other carriers to create a wider bandwidth for data transmission. Whilst Fig. 2 illustrates that a component carrier may be divided into sub-bands, each of these sub-bands then forms an independent channel and so each sub-band may also be referred to as a component carrier.

ISAC and SBFD may both be enabled together (e.g., in 6G). Both can be integrated at the same BS.

It is an aim for mobile network operators to support ISAC and SBFD features while ensuring efficient use of spectrum resources, so that the new functionality may be added while fulfilling the requirements of existing customers. Therefore, adding ISAC sensing capabilities to base stations should not be disadvantageous for existing communication customers. To achieve this, efficient utilization of the available frequency spectrum is needed, so as not to waste limited frequency resources, and without creating interference to the data signals detrimental to the quality of service of communications services. It is a further goal of mobile network operators that the new sensing functionality is accurate and that a targeted object can be precisely detected.

Cross-link interference (CLI) between neighbouring base stations (BSs) remains a significant challenge. In a specific example, a BS transmitting in DL can interfere with the UL reception of an adjacent BS operating in an adjacent frequency band.

A new approach to mitigating this issue is proposed in this disclosure and involves leveraging Integrated Sensing and Communications (ISAC) technology. ISAC combines wireless communication and radar-like sensing within the same infrastructure. In this proposed solution, a BS with ISAC functionality is deployed alongside a neighbouring base station (e.g., a SBFD-enabled BS). The ISAC system allocates ISAC sensing signals during downlink transmission time frames for frequencies adjacent to UL frequencies of the neighbouring base station. Since ISAC sensing signals typically operate at lower power and higher antenna tilt, they naturally reduce CLI while maintaining communication capabilities.

Integrating SBFD with ISAC provides advantageous features from each scheme to the same BS. This may increase the flexibility and the available spectrum use but also increases the complexity. The proposed methods aim to integrate the sensing functionality associated with ISAC and the extended UL coverage and lower latency from SBFD, while also solving some of the problems described above. The proposed methods also aim to integrate these features together, without impacting the performance of each other and while using the available radio spectrum efficiently.

In a specific example, the ISAC system transmits a sensing signal during the same time frame as the neighbouring base station receiving the extended UL SBFD transmission from a UE.

The sub-band allocated by the neighbouring base station for SBFD extended uplink is adjacent to the sub-band allocated for sensing by the ISAC system.

The received signal comprises the SBFD UL signal and the interference from the sensing signal.

The sensing signals are usually constant signals. In other words, the predefined sensing signal transmitted by the ISAC base station is generally the same each time. This will lead to almost a constant interference value, as long as the channel conditions remain the same.

In order to remove the interference from the received signal and isolate the data signal, the interfering sensing signal may be subtracted from the received signal.

The interfering sensing signal can be determined separately. In one example, the interfering sensing signal may be received when there is no SBFD data signal exchanged between the UE and the base station (in a reserved radio resource block).

In another example, the interfering sensing signal can be predetermined by isolating the interfering signal from a received signal that comprises the interfering component and a data signal component. The interfering signal may be isolated based on prior knowledge of the predetermined sensing signal.

The value of the determined interfering sensing signal may be stored. Then, it may be used during the interference suppression stage when a signal is received.

The proposed methods may be applied for reducing and removing interference for a system comprising ISAC and SBFD. Interference caused by an ISAC base station to a neighbouring base station may be reduced and more easily removed by allocating sensing signals to one or more radio resource blocks that cause the interference. Sensing signals may cause less interference and may be more easily removed from the received signal. The proposed methods may therefore enable a SBFD extended UL transmission period at the neighbouring base station and improve the signal to interference ratio of the extended UL signal received at the neighbouring base station. This may extend UL coverage and reduce latency. Moreover, the ISAC BS can provide sensing functionality.

By providing methods for reducing and removing interference from the received UL signals during the extended UL radio resource allocation, lower guard bands between DL and UL signals may be needed. The implementation complexity may also be decreased (e.g., a smaller antenna array size is required, components used in SBFD to cancel self-interference at the BS may be reduced).

Cross-Link Interference in SBFD networks is experienced in a number of different scenarios. Two important example scenarios are described separately below.

In DL-to-UL interference, the high-power DL signal from BS1 interferes with the UL reception at BS2 in an adjacent frequency sub-band. This is a dominant CLI issue, due to the significant power difference between BS DL transmissions and UE UL transmissions.

In UL-to-DL Interference, the extended UL transmission from UE2 connected to BS2 can interfere with DL reception of UE1 at BS1 during a DL time slot. This interference is usually weaker than DL-to-UL but still impacts performance. The level of interference may vary depending on the position of the UEs within the cells. For example, the interference may be stronger if UE2 and UE1 are in close proximity to each and relatively far from BS1 (e.g., at a cell boundary). Such scenarios may be addressed by dynamic scheduling to allocate radio resource blocks to these UEs that are not subject to such high levels of interference.

These are two important examples but are not the only cases where CLI can occur. For example, UL-to-UL and DL-to-DL interference scenarios also exist.

Conventionally, CLI mitigation methods include: uniform DL power reduction, which improves UL but reduces DL throughput; guard bands, which reduce interference but waste spectrum; and coordinated scheduling, which requires complex network management.

The proposed methods aim to reduce CLI between an ISAC cell and a neighbour cell, without the drawbacks of the above methods. To achieve this, the proposed methods allocate sensing signals at the ISAC BS to particular radio resource blocks and thereby dynamically control CLI, without sacrificing network performance. One, both, or neither of the cells may be operating as SBFD.

A number of examples are described below to illustrate the proposed methods. These examples assume that SBFD is used by one or both of the ISAC base station and the neighbouring base station. However, as discussed above, the proposed methods are equally applicable where both of the base stations are conventional TDD base stations (and at least one is an ISAC base station).

In a first example, the neighbouring base station operates in a SBFD mode. The ISAC system is an ISAC-enabled SBFD base station, where one or more radio resource blocks in one or more frequency sub-bands in a DL time frame are allocated for communicating ISAC sensing signals, rather than DL data signals. The neighbouring base station allocates one or more radio resource blocks in one or more frequency sub-bands in the DL time frame for communicating UL data signals. The ISAC base station allocates the ISAC sensing signals in radio resource blocks that are adjacent to the radio resource blocks of the UL data signals of the neighbouring base station (i.e., the radio resource blocks are in the same time frame and in an adjacent frequency sub-band).

In a second example, the neighbouring base station operates in a SBFD mode. The ISAC system is a purely ISAC-enabled BS, transmitting sensing signals while assisting with UL reception.

The ISAC system may use ISAC Sensing Signals as low-power signals during a DL time period. Instead of transmitting high-power DL signals near the UL band of the neighbouring BS, the ISAC-enabled BS transmits sensing signals. The sensing signals may have a lower power than standard DL data signals. Therefore, they may generate less interference in the adjacent UL band. The sensing signals may be directionally tilted upwards (e.g., to detect drones). Therefore, they may introduce less interference to ground UEs.

In some scenarios, the ISAC cell may experience interference from the neighbouring cell (or each cell experiences mutual interference from the other). Radio resource blocks that experience significant interference may be allocated as sensing blocks, which are more robust and less affected by interference. If sensing signals are transmitted by the ISAC base station during one or more radio resource blocks in a DL time period, UEs served by the ISAC base station are not receiving DL signals during those radio resource blocks. Therefore, there will be no CLI from the neighbouring base station (e.g., SBFD UE UL) affecting the ISAC data signal (e.g., ISAC UE DL) during that radio resource block (because the block is allocated for sensing instead).

CLI from data signals within a SBFD neighbouring cell (i.e. DL signals from the SBFD BS or UL signals from the SBFD UE) may have a relatively low impact on sensing signals communicated by the ISAC BS, compared to CLI from SBFD BS to data signals communicated by a legacy TDD BS. The received signal at the ISAC BS during the sensing radio resource block will be a mixture of the reflected sensing signal from an object of interest and the CLI from the neighbouring SBFD base station. The ISAC BS may cross-correlated/auto-correlate the received signal with the transmitted sensing signal, which will result in a sharp peak signal indicating receiving the sensing signal. Unlike a legacy TDD BS receiving an UL data signal, the ISAC BS is not expecting the received sensing signal to be decoded. Therefore, the sensing signal is more robust to CLI.

In a further example, an ISAC system may perform frequency-selective DL transmission. The ISAC BS may dynamically allocate transmission of DL data signals to radio resource blocks having center frequencies further away from center frequencies of radio resource blocks used by neighbouring base stations for receipt of UL data signals. The ISAC BS may further dynamically replace DL data signals with ISAC sensing signals in radio resource blocks that are subject to interference with data signals communicated by neighbouring base stations. In other words, allocate sensing signals to radio resource blocks that have center frequencies close to center frequencies of radio resource blocks of neighbouring base stations (particularly if those radio resource blocks are used by the neighbouring base station for UL data signals). In this way, the base stations are able to maintain full-spectrum utilization, without the need for guard bands.

In some examples, spectrum usage and resource allocation may be further enhanced via coordination between the ISAC BS and the neighbouring base station. The neighbouring base station (e.g., SBFD BS) can coordinate with the ISAC-enabled BS to exchange real-time interference data and/or allocation data. If UL SINR degrades, the ISAC BS may dynamically reduce sensing signal power to further minimize CLI.

Where the ISAC base station and the neighbouring base station are both ISAC base stations, the base stations may coordinate allocation of sensing radio resource blocks to use the spectrum efficiently. For example, where radio resource blocks at the ISAC base station and the neighbouring base station are subject to mutual interference, one or other of the base stations may allocate their respective block as a sensing block. However, it may be inefficient for both base stations to allocate these blocks as sensing blocks. Therefore, by coordinating between the base stations, one base station may allocate their respective block as a sensing block, while the other base station allocates their respective block as a data block (downlink or extended uplink).

Where there are a plurality of pairs of mutually interfering blocks, the base stations may coordinate to allow each base station to allocate a sufficient number of blocks as data blocks (downlink or extended UL blocks).

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific network in some examples, (such as a 6G or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a data signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.
In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of allocating radio resource blocks in an Integrated Sensing and Communication, ISAC, system, wherein the ISAC system is configured to communicate sensing signals and data signals during a plurality of radio resource blocks, wherein each radio resource block has a corresponding frequency, the method comprising:
determining that signals communicated by the ISAC system during one or more radio resource blocks within an available frequency band cause interference with and/or experience interference from signals communicated by a neighbouring base station; and
allocating one or more radio resource blocks within the available frequency band for communicating sensing signals.

2. The method of claim 1, wherein determining that the signals communicated by the ISAC system cause interference with and/or experience interference from the signals communicated by the neighbouring base station comprises determining that a level of interference between the signals communicated by the ISAC system and the signals communicated by the neighbouring base station exceeds a threshold.

3. The method of claim 2, wherein the level of interference comprises:
a level of interference caused by the signals communicated by the ISAC system affecting the signals communicated by the neighbouring base station; and/or
a level of interference caused by the signals communicated by the neighbouring base station affecting the signals communicated by the ISAC system.

4. The method of any preceding claim,
wherein the available frequency band is divided into a plurality of frequency sub-bands, wherein each radio resource block has a corresponding frequency sub-band, wherein the one or more radio resource blocks that cause and/or experience interference have a first frequency sub-band, and wherein the one or more radio resource blocks allocated for communicating sensing signals have the first frequency sub-band,
wherein a frequency band available to the neighbouring base station is divided into a plurality of frequency sub-bands, wherein the signals communicated by the neighbouring base station that cause interference with and/or experience interference from the signals communicated by the ISAC system are communicated via a second frequency sub-band adjacent to the first frequency sub-band.

5. The method of any preceding claim, wherein the signals communicated by the neighbouring base station are data signals communicated between the neighbouring base station and a UE served by the neighbouring base station.

6. The method of claim 5, wherein the data signals communicated between the neighbouring base station and the UE served by the neighbouring base station are uplink data signals sent from the UE to the neighbouring base station.

7. The method of claim 5, wherein the data signals communicated between the neighbouring base station and the UE served by the neighbouring base station are downlink data signals sent from the neighbouring base station to the UE.

8. The method of any preceding claim, wherein each radio resource block has a corresponding beam direction,
wherein the one or more radio resource blocks that cause and/or experience interference each have a beam direction; and
wherein the one or more radio resource blocks allocated for communicating sensing signals each have the beam direction.

9. The method of any preceding claim, further comprising:
communicating, between the ISAC system and the neighbouring base station, an indication that the one or more radio resource blocks are allocated for communicating sensing signals.

10. The method of claim 9, wherein the neighbouring base station is configured to allocate one or more radio resource blocks as extended uplink radio resource blocks, wherein the one or more radio resource blocks allocated as extended uplink radio resource blocks by the neighbouring base station each have a second frequency sub-band adjacent to a frequency sub-band of the one or more radio resource blocks allocated for communicating sensing signals by the ISAC system.

11. The method of any preceding claim, further comprising
communicating, between the ISAC system and the neighbouring base station, a level of interference between the signals communicated by the ISAC system and the signals communicated by the neighbouring base station determined by the ISAC system, the neighbouring base station, a UE served by the ISAC system and/or a UE served by the neighbouring base station.

12. The method of any preceding claim, further comprising:
reevaluating whether signals communicated by the ISAC system during one or more radio resource blocks within the available frequency band are subject to interference with the signals communicated by the neighbouring base station; and
if the signals communicated by the ISAC system during the one or more radio resource blocks within the available frequency band are no longer subject to interference with the signals communicated by the neighbouring base station, allocating one or more radio resource blocks within the available frequency band for communicating data signals.

13. The method of any preceding claim, further comprising:
reevaluating whether signals communicated by the ISAC system during one or more radio resource blocks within the available frequency band are subject to interference with the signals communicated by the neighbouring base station; and
if the signals communicated by the ISAC system during one or more radio resource blocks within the available frequency band are still subject to interference with the signals communicated by the neighbouring base station, reducing a transmission power of the sensing signals communicated by the ISAC system.

14. An Integrated Sensing and Communication, ISAC, base station configured to perform the method of any preceding claim.

15. A computer program comprising instructions that, when executed by a processor, cause the processor to perform the method of any of claims 1 to 13.
